# EUROPEAN PATENT APPLICATION

(11) **EP 2 031 556 A1**
(43) Date of publication of application: **04.03.2009**
(21) Application number: 06757178.6
(22) Date of filing: 08.06.2006
(51) Int. Cl.: G06T 1/00

(54) **GUIDANCE DEVICE AND METHOD**

(71) Applicant: Fujitsu Ltd., Kawasaki-shi, Kanagawa 211-8588 (JP)
(72) Inventor: HAMA, Soichi, Kawasaki-shi, Kanagawa 211-8588 (JP); WATANABE, Masaki, Kawasaki-shi, Kanagawa 211-8588 (JP); AOKI, Takahiro, Kawasaki-shi, Kanagawa 211-8588 (JP); ENDOH, Toshio, Kawasaki-shi, Kanagawa 211-8588 (JP)
(74) Representative: Holtby, Christopher Lawrence
(86) International application number: PCT/JP2006/311531
(87) International publication number: WO 2007/141860

(57) **Abstract**

A device performs measurement by placing an object over the device without contact. To guide the object to a position appropriate for the measurement, a sample virtual image based on the shape of the object is displayed in an appropriate position, the difference in the position, attitude, and shape between the object and the virtual image is calculated, and the calculated difference is displayed in the same place as the sample virtual image, thereby allowing a user to efficiently position the object.

## Description

### Technical Field

The present invention relates to a guidance device and method for guiding an object to the correct position and attitude relative to a capture device in a device such as an inspection device, an authentication device, etc. for capturing a subject without contact.

### Background Art

There is a device for capturing a subject without contact to perform an inspection and authentication. To obtain correct inspection and authentication results using this device, it is necessary to capture a image of a subject such as a hand in a predetermined position, direction, and shape. A user does not capture a image of a subject while watching through the finder of the device held by user hands as with a camera, but the subject is often captured by placing the subject over a capture device fixed to a device. Furthermore, since a subject is not fixed, the position, direction, shape, etc. of the subject are not determined, and it has been difficult to capture an appropriate image.

Therefore, conventional techniques have adopted a method of showing a sample of placing a subject over a capture device, and notifying a user whether or not the current position is a correct position by voice etc.

For example, the patent document 1 discloses the technology of applying a model of a hand as a sample to be placed over the surface of a capturing device of an authentication device for capturing an image of a vein without contact, detecting the position and direction of the hand, and providing a notification by voice, a bell, the light of a lamp, etc. when the hand is too close to the surface of the device.

The patent document 2 discloses the technology of displaying a 3-dimensional image of a finger by a stereoscope, detecting the amount of overlap between the 3-dimensional image and the finger, and capturing an image when they match each other.

However, in the conventional technology, it is hard to determine how the position and direction of a subject are to be corrected. Therefore, an appropriate position can be obtained only after much trial and error, and the positioning efficiency is very low.

Patent Document 1: International Publication No. 04/021884 Pamphlet

Patent Document 2: Japanese Published Patent Application No. H5-108808

### Disclosure of the Invention

The present invention has been developed to solve the above-mentioned problems and aims at providing an efficient guidance device and method for easily positioning a subject.

According to an aspect of the present invention, the guidance device according to the present invention performs measurement by placing an obj ect over the device without contact, and includes: a virtual image display unit for displaying a virtual image; a sample display generation unit for making the virtual image display unit display a sample virtual image based on the shape of the object at a position where the object is to be finally arranged; a status detection unit for detecting the position and attitude of the object; an unit for calculating the amount of correction on the difference between the position and attitude of the object and the position and attitude of the virtual image; and a guidance display generation unit for making the virtual image display unit display a guidance display indicating the calculated difference in the same position as the virtual image.

It is desired that, in the guidance device according to the present invention, the virtual image has the same size and shape as the object.

It is also desires that, in the guidance device according to the present invention, the size and shape of the virtual image are determined by the data recorded on a storage medium.

In addition, it is desired that, in the guidance device according to the present invention, the guidance display is an arrow display indicating the shift of the position, the change of the attitude, or the change of the shape from the current object to the virtual image.

In addition, it is desired that, in the guidance device according to the present invention, the guidance is an animation display indicating the shift of the position , the change of the attitude, or the change of the shape from the current object to the virtual image.

Furthermore, it is desired that, in the guidance device according to the present invention, the display of the shift of the position, the change of the attitude, or the change of the shape is separately performed.

It is also desired that, in the guidance device according to the present invention, auxiliary lines indicating the position and attitude are displayed around each of the object and the virtual images.

In addition, it is desired that, in the guidance device according to the present invention, auxiliary planes indicating the position and attitude are displayed around each of the object and the virtual images.

According to the present invention, since a user can recognize a practical amount of correction to obtain the correct position and attitude without moving the line of sight from a subject, the subject can be efficiently positioned without wasteful operations.

### Brief Description of the Drawings

FIG. 1 shows the configuration of the guidance device according to an embodiment of the present invention;
FIG. 2 shows the process flow of the processing unit of the guidance device according to an embodiment of the present invention;
FIG. 3 shows the configuration of the display device of the guidance device according to an embodiment of the present invention;
FIG. 4 shows the principle of displaying a virtual image using a concave mirror;
FIG. 5 shows the display device using a stereoscope;
FIG. 6 shows the display device using polarizing glasses;
FIG. 7 is an explanatory view of changes of the position of a subject;
FIG. 8 is an explanatory view of changes of the attitude of a subject;
FIG. 9 shows a change of the shape of a subject;
FIG. 10 shows the guidance display according to an embodiment of the present invention when a displacement occurs;
FIG. 11 shows the guidance display according to an embodiment of the present invention when a change of attitude occurs;
FIG. 12 shows the guidance display according to an embodiment of the present invention when a deformation occurs;
FIG. 13 is a flowchart of the guidance process by the guidance device according to an embodiment of the present invention;
FIG. 14 is a flowchart when correction animation is used in guidance display;
FIG. 15 is an explanatory view of the detecting method according to an embodiment of the present invention when a sample is hidden;
FIG. 16 shows auxiliary display by an auxiliary line according to an embodiment of the present invention; and
FIG. 17 shows auxiliary display by an auxiliary plane according to an embodiment of the present invention.

### Best Mode for Carrying Out the Invention

The embodiments of the present invention are described below with reference to the attached drawings.

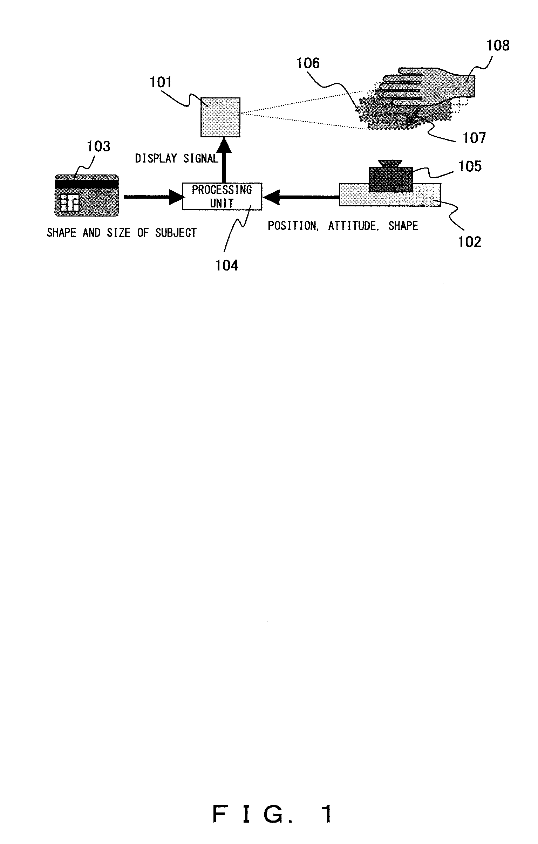

FIG. 1 shows the configuration of the guidance device according to an embodiment of the present invention.

The guidance device according to the present invention includes a display device 101 for displaying a guidance display 107 indicating a sample virtual image 106 and the amount of correction, a position/attitude/shape detection device (status detection device) 102 for detecting the status such as the position, attitude, shape, etc. of a subject 108, a storage medium 103 storing the shape and the size of the subject 108, a processing unit 104 for processing each signal, and a camera 105 for capturing the subject 108.

The storage medium 103 is a portable storage medium such as an IC card, a magnetic card, etc., and records the size and the shape of a subject such as the hand of a user etc. Since the size and the shape of a subject such as a hand etc. depend on each user, it is desired that the data of the size and the shape of a subject recorded on the storage medium 103 is the data indicating the same shape and size as the subject such as the hand of a user etc. During the operation, the user sets the storage medium 103 on the read unit of the guidance device. The storage medium 103 can be a storage device built in the guidance device or a storage device connected over a network.

The guidance device according to the present invention displays the sample virtual image 106 to be seen in front of the camera on the basis of the shape and the size of the subject 108 and the correct position relative to the camera 105. When the user places the subject 108 closer to the device, the image of the subject 108 is captured by the camera 105, and the position, attitude, and shape of the subject 108 are detected by the position/attitude/shape detection device 102.

The position, attitude, and shape of the subject 108 are compared with the sample information recorded on the storage medium 103, the amount to be corrected is calculated by the processing unit 104, and the display indicating the amount to be corrected is shown close to the sample virtual image 106. The user moves the subject to the correct position while simultaneously watching the sample virtual image 106, the guidance display 107, and the subject 108.

Described below are the details of each unit.

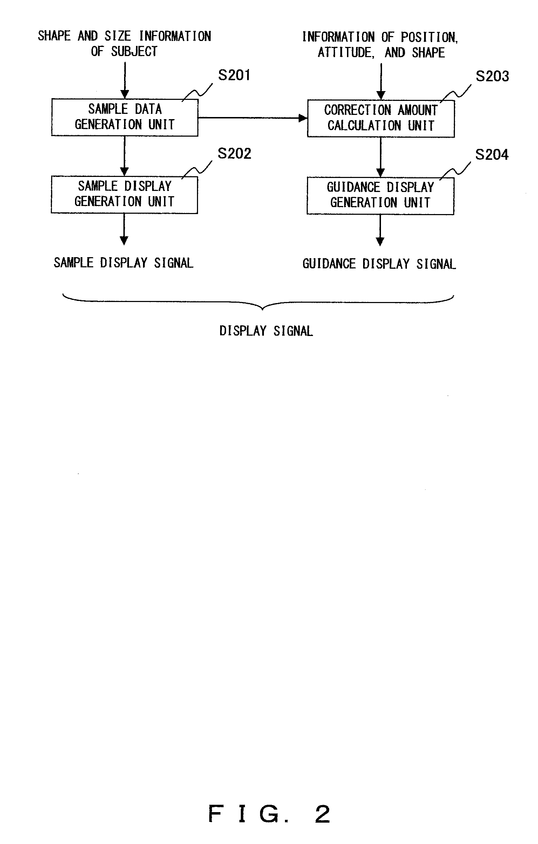

FIG. 2 shows the process flow of the processing unit of the guidance device according to an embodiment of the present invention.

In step S201, the sample data generation unit in the processing unit of the guidance device calculates correct sample data from the shape/size information about the subject read from the storage medium 103 and the correct position information (not shown in the attached drawings) on the camera 105 stored in the guidance device, and the sample data is transmitted to the sample display generation unit and the correction amount calculation unit in the processing unit of the guidance device.

In step S202, the sample display generation unit in the processing unit of the guidance device generates a sample display signal on the basis of the calculated sample data, and outputs the signal to the display device 101.

On the other hand, in step S203, the position, attitude, and shape of the subject detected by the position/attitude/shape detection device 102 are compared with the sample data by the correction amount calculation unit in the processing unit of the guidance device, and the amount of correction is calculated and output to the guidance display generation unit in the process unit of the guidance device.

In step S204, the guidance display generation unit generates a guidance display signal on the basis of the calculated amount of correction, outputs the signal to the display device 101, and the guidance display 107 is displayed.

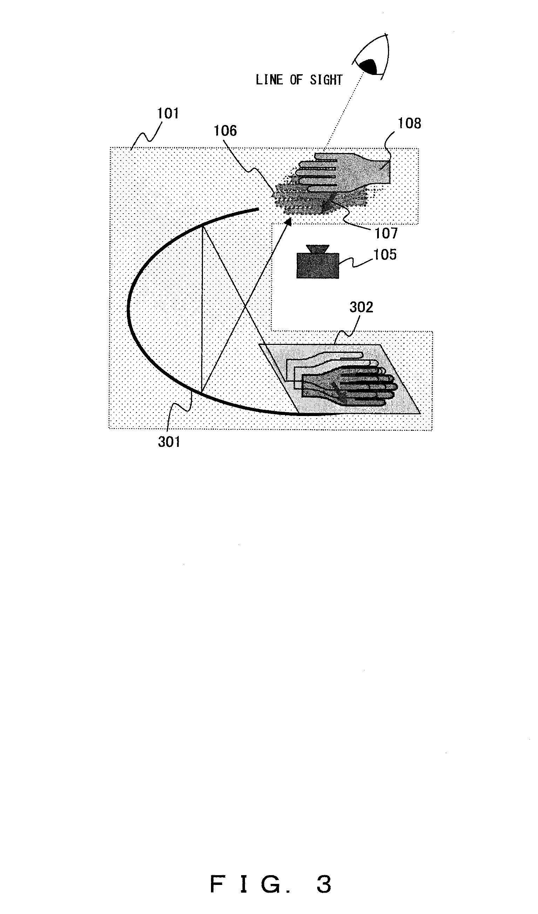

FIG. 3 shows the configuration of the display device of the guidance device according to an embodiment of the present invention.

In FIG. 3, the display device 101 displays a virtual image using a concave mirror 301.

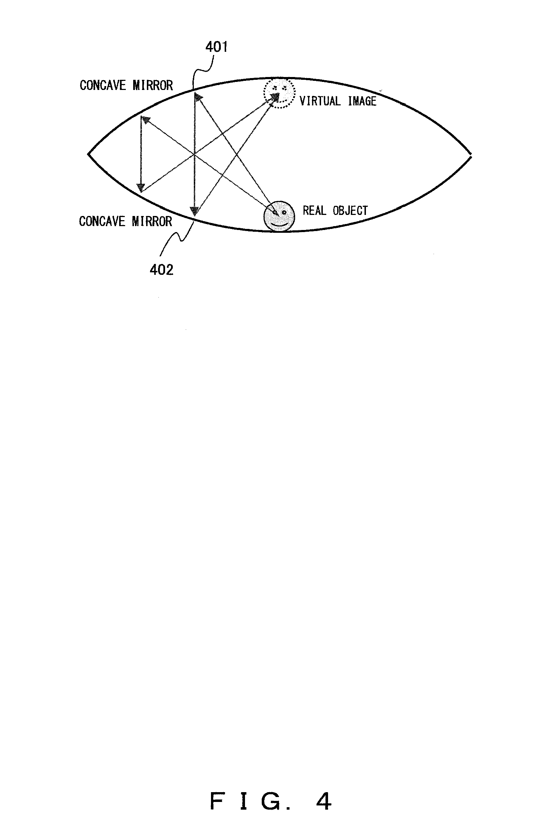

FIG. 4 shows the principle of displaying a virtual image using a concave mirror.

As shown in FIG. 4, two concave mirrors 401 and 402 are arranged opposite each other with the focus of one of the mirror arranged at the center of the other mirror. Then, the virtual image of an object placed at the center of one concave mirror 402 appears at the center of the other concave mirror 401. Since the concave mirror can sufficiently function with a part of the mirror cut out, only a part of the concave mirror 301 can be used as shown in FIG. 3 so far as the direction of a user can be limited. As shown in FIG. 3, when a display panel 302 such as a liquid crystal display etc. is arranged at the center of the concave mirror 301, and a sample virtual image generated by the processing unit shown in FIG. 2 and an image for performing guidance display are displayed, the virtual images 106 and 107 appear forward the lens of the camera 105 by the reflection of the concave mirror 301.

According to the present invention, the device for realizing virtual display is not limited to the above-mentioned device, but another device can be used.

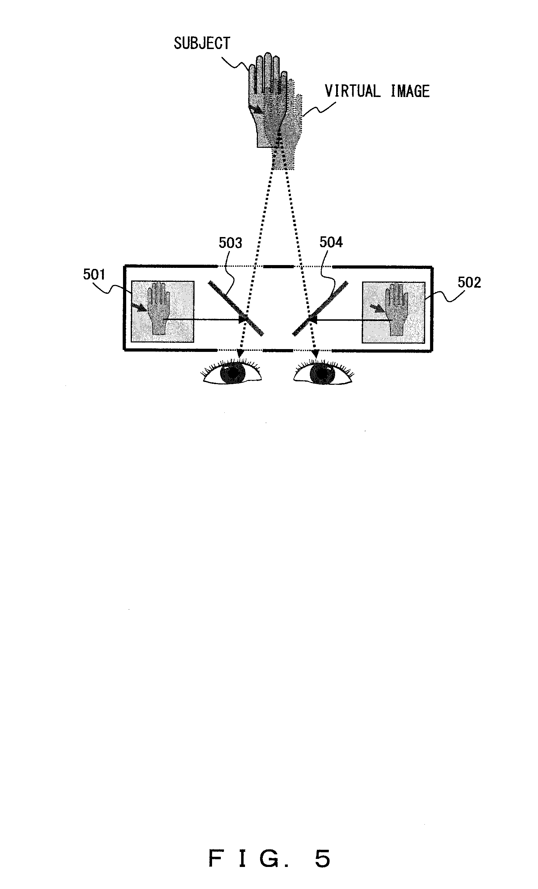

FIG. 5 shows the display device using a stereoscope.

In FIG. 5, the display device using a stereoscope separately shows parallax images to the left and right eyes of a user, has display panels 501 and 502 in the scope, displays parallax images on the display panels 501 and 502, and shows the images reflected by half mirrors 503 and 504 to the left and right eyes, respectively, thereby showing a virtual image forward. Since the image is projected by the half mirror, the outside real world can be simultaneously observed.

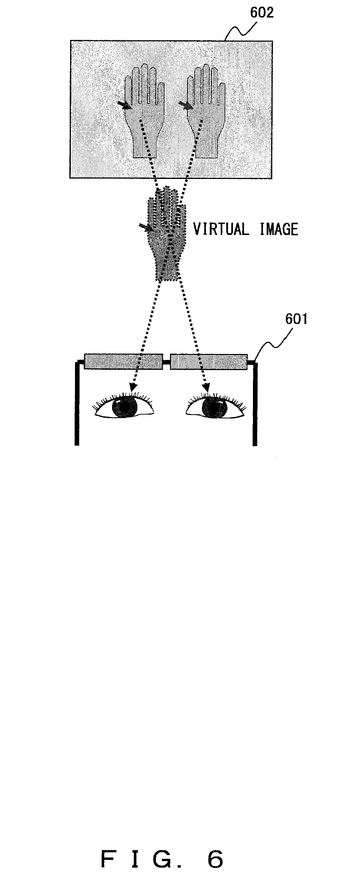

FIG. 6 shows the display device using polarizing glasses.

In FIG. 6, the display device using polarizing glasses 601 displays parallax images on a display panel 602 capable of displaying two polarization states, or projects images on two projectors in the separate polarization states so that the images can be observed by the glasses with the polarizing filters for the right and left polarization, thereby showing a 3-dimensional image.

Other special glass systems can be a system displaying parallax images with a time difference and having right and left shutters, a system displaying parallax images in different colors such as red and blue, etc. and viewed using right and left color filters, etc.

In addition, a virtual image can also be realized by providing a prism on the surface of a display panel (although not shown in the attached drawings) so that separate images can be shown to the left and right eyes of the user.

Described next is the position/attitude/shape detection device according to an embodiment of the present invention. Before describing the position/attitude/shape detection device according to an embodiment of the present invention, items relevant to the position, attitude, and shape are described.

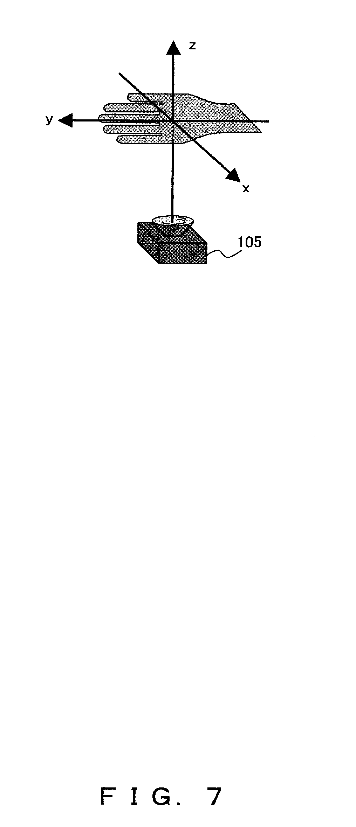

FIG. 7 is an explanatory view of the change in position of a subject.

A subject has the freedom of moving parallel to the x, y, and X axes orthogonal to one another. Detecting a position refers to detecting the amount of parallel movement of the subject relative to the correct position. The positions in the x and y directions can be easily detected from the images obtained by the camera 105. Although it is difficult to accurately detect the position in the z direction, it can be easily detected by a distance sensor in, for example, an infrared reflection system.

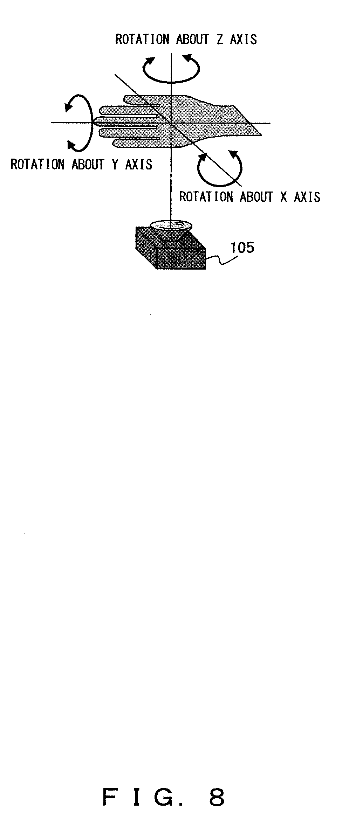

FIG. 8 is an explanatory view of a change of the attitude of a subject.

As shown in FIG. 8, the subject has the freedom of rotating on the current position. The rotation is performed on the three axes, that is, the x, y, and z axes. Detecting the attitude refers to detecting the amount of rotation from the correct status (in which direction the subject is placed). A change in attitude on the z axis can be easily detected from the image captured by the camera 105. The technique of detecting the changes in attitude on the x and y axes is disclosed by the International Publication No. 04/021884 Pamphlet "Personal Recognition Device" disclosed by the Applicant. Also disclosed is the technique of detecting the attitude by a capturing device provided with a plurality of distance sensors described in International Publication No. 04/084140 Pamphlet "Shooting Device".

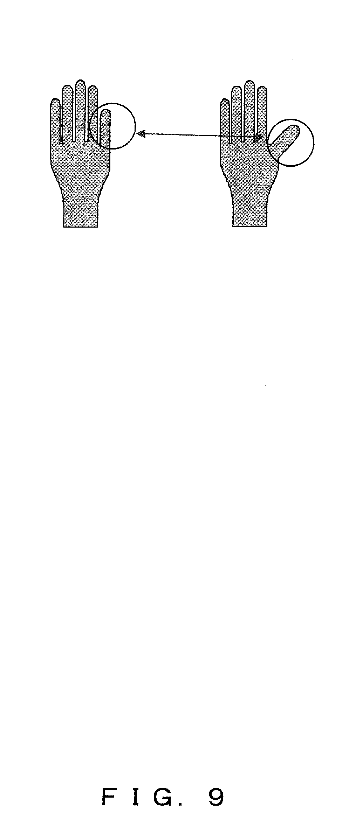

FIG. 9 shows a change in shape of a subject.

Normally, the freedom of an object placed in space can be 6 types of freedom shown in FIGS. 7 and 8. However, there can be a subject whose shape can be changed by a connection point (joint) where a plurality of portions are coupled such as a folding mobile telephone, a human body, etc.

Therefore, a change in shape as shown in FIG. 9 is also considered. FIG. 9 shows a change in opening fingers, for example. On the right in FIG. 9, the finger enclosed by the circle is opened while it is closed on the left in FIG. 9. The change in shape can be detected by comparing the shape obtained from the image of the camera 105 with the shape of the sample image.

Described next is the guidance display according to an embodiment of the present invention.

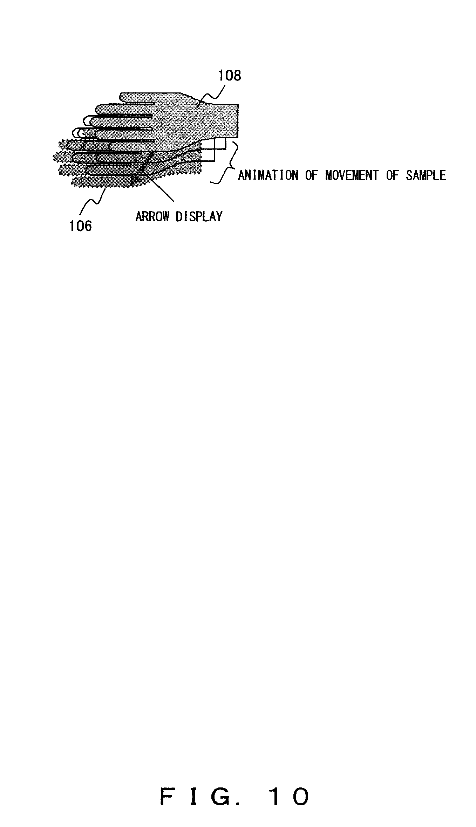

FIG. 10 shows the guidance display according to an embodiment of the present invention when a displacement occurs.

The sample virtual image 106 is displayed at the position where the subject 108 is to be placed. Therefore, when the position of the subject 108 is not appropriate, the sample virtual image 106 and the subject 108 are observed separately. The graphics indicating the amount of movement to be made in a given direction are overlapped and displayed on the sample virtual image 106. That is, the graphics are displayed at the same position as the subject 108 and the sample virtual image 106, especially the graphics are displayed at between the subject 108 and the sample virtual image 106. For example, as shown in FIG. 10, animation display of the movement of the sample virtual image 106 is performed from the current position of the subject 108 to the correct position, or an arrow is displayed from the current position to the correct position with the length depending on the moving distance.

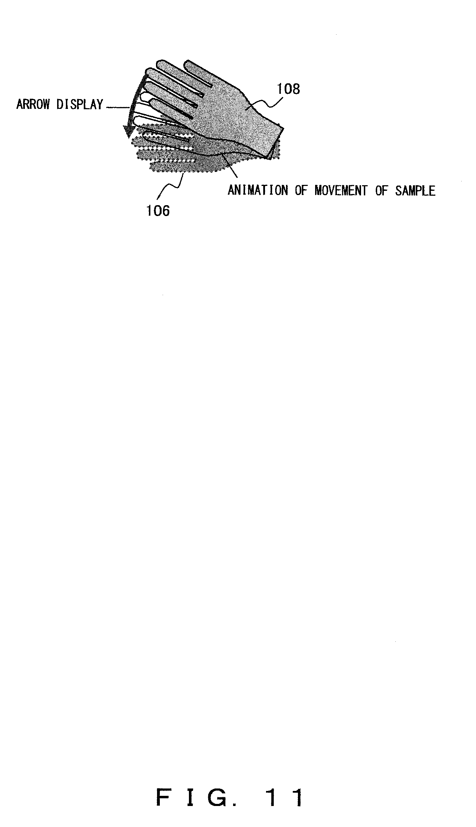

FIG. 11 shows the guidance display according to an embodiment of the present invention when a change of attitude occurs.

When the attitude (angle) of the sample virtual image 106 is different from the attitude of the subject 108, the sample virtual image 106 and the subject 108 are observed respectively as with the case of the displacement described above. The graphics indicating the amount of rotation to be made in a given direction are overlapped and displayed on the sample virtual image 106. For example, as shown in FIG. 11, animation display of the rotation of the sample virtual image 106 is performed from the current attitude of the subject 108 to the correct attitude, or an arrow is displayed depending on the rotation angle.

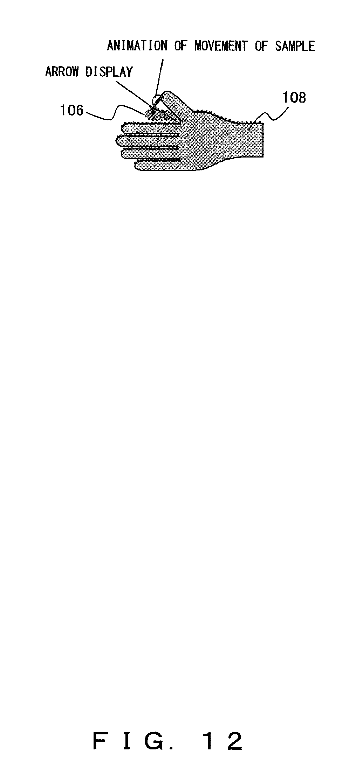

FIG. 12 shows the guidance display according to an embodiment of the present invention when a deformation occurs.

FIG. 12 practically shows an example when the thumb is crooked. The portion without deformation corresponding to the sample virtual image 106 is hidden behind the subject 108, but each of the deformed portion corresponding to the sample virtual image 106 and the subject 108 visually recognized. The graphics indicating the amount of movement to be made to the deformed portion are overlapped and displayed on the sample virtual image 106. For example, as shown in FIG. 12, animation display of the movement or arrow display is performed from the current position to the correct position.

Thus, when the guidance display is performed, there is the possibility of incomprehensible display if all correction elements including the movement, attitude, and deformation are simultaneously displayed. Therefore, each element is assigned a priority and then guided. The priority can be assigned by:
(1) repeating the guidance until the convergence is attained in the order of movement, attitude, and deformation; and
(2) repeating the guidance in the order from the largest correction rate until the convergence is attained.

The correction rate is defined as the rate of an amount of correction to the reference determined for each of the position, attitude, and deformation. For example, the change in position can be defined as an amount of change in position with 5 cm set as 100%, the change in attitude can be defined as an amount of change in angle with 30° as 100%, and the deformation can be defined as a rate of an amount of corrected area to the area of a sample projected on the Z axis, thereby comparing the amount of correction between different dimensions.

Since the subject 108 completely overlaps the sample virtual image 106 when the position, attitude, and shape are correct as a result of the guidance, the display of the sample virtual image cannot be seen. Thus, the completion of the correction can be informed, but a further clear notification can be made by performing auxiliary display by changing the color around the sample virtual image etc.

In addition, voice, a bell, a lamp, etc. can be used as auxiliary means from the start to the end of the guidance above as with the conventional technology.

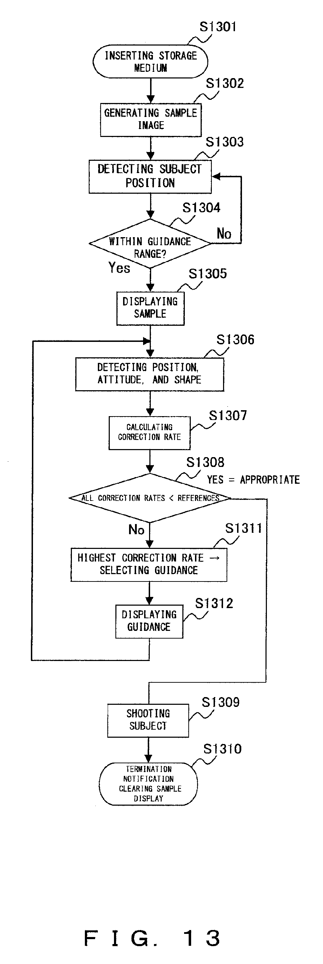

FIG. 13 is a flowchart of the guidance process by the guidance device according to an embodiment of the present invention. FIG. 13 practically shows the case where the guidance is performed in order from the highest correction rate.

In step S1301, a record medium such as an IC card etc. is inserted into a read unit.

In step S1302, the information about the shape and size of a subject is read from the storage medium, and a sample image is generated.

In step S1303, the position of the subject is detected.

In step S1304, it is determined whether or not the subject is in a guidance range. If it is in the guidance range, control is passed to step S1305. If not, control is returned to step S1303. The guidance range is set as a range in which the display device can display a virtual image.

In step S1305, a sample generated in step S1302 is displayed.

In step S1306, the position, attitude, and shape of the subject are detected.

In step S1307, the correction rate of each of the position, attitude, and shape is calculated.

In step S1308, it is determined whether or not all correction rates are within the respective references. If yes, control is passed to step S1309. If not, control is passed to step S1311.

In step S1309, the subject is shot.

In step S1310, the user is notified of the completion of the process above, and the display of the sample is cleared.

In step S1311, the respective correction rates of the position, attitude, and shape are compared, and the highest rate is selected.

In step S1312, the guidance display is performed. Then, control is returned to step S1306.

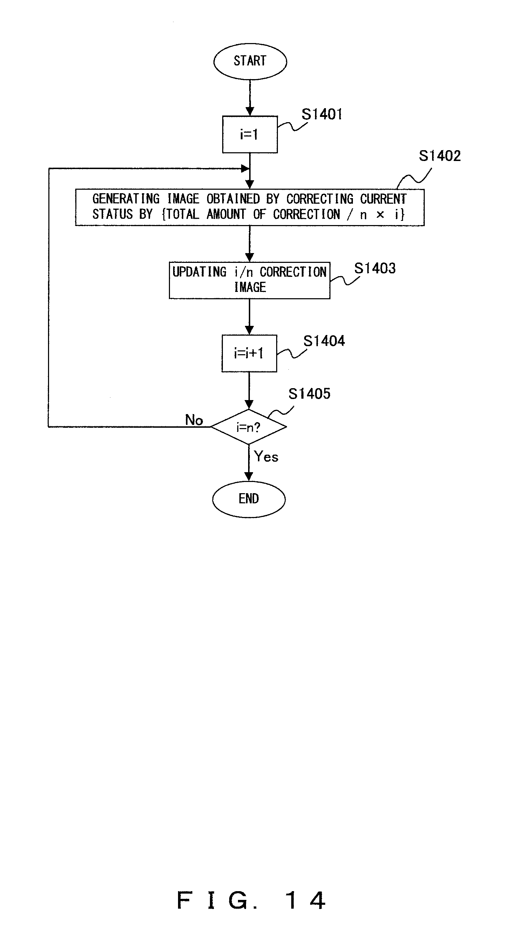

FIG. 14 is a flowchart when correction animation is used in guidance display.

In step S1401, the variable i is set to 1.

In step S1402, the image showing the subject being shifted toward the sample by {(total amount of correction/n)*i} is generated.

In step S1403, displayed correction image is cleared if any, and the image generated in step S1402 is displayed, thereby updating the display image.

In step S1404, i is incremented.

In step S1405, it is determined whether i equals n (i=n). If i=n, control is passed to step S1406, and control is returned to S1402 when i≠n. It is also possible to return control to step S1402 to terminate the process after entering the loop several times.

For example, consider the animation of displaying the correction of the position. Assume n is 10 (n=10). When the position of the subject is displaced by 5cm relative to the sample virtual image, the total amount of correction is 5 cm. Since 0.5cm is obtained by dividing 5cm by 10, a virtual image 0.5cm closer to the sample virtual image from the subject is displayed, and a virtual image further closer by 0.5cm, that is, a total of 1cm closer to the sample virtual image is displayed. Similarly, by sequentially displaying the virtual images 0.5cm sequentially closer to the sample, the animation of displaying the correction can be configured.

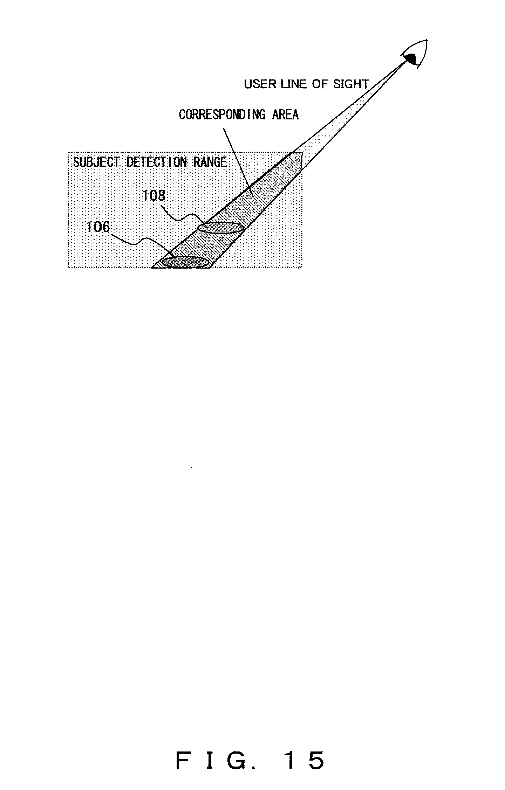

FIG. 15 is an explanatory view of the detecting method according to an embodiment of the present invention when a sample is hidden.

Exceptionally, when the subject 108 covers the sample virtual image 106 when viewed from a user, the sample virtual image 106 can be unseen in the incomplete correction state. In this case, it is desired to use auxiliary display such as auxiliary lines, auxiliary planes, etc.

Since the guidance display is performed only when the subject is in a detectable range, the auxiliary display can be performed when the subject 108 enters the range indicated by the diagonal lines where the detectable area overlaps the area from the line of sight to the sample virtual image 106 as shown in FIG. 15. A margin is required for the area in which auxiliary display is necessary because the area depends on the height of a user. However, since a user uses the device from the direction predetermined to a certain extent, the position of the line of sight of the user can be limited to a certain extent. The area requiring auxiliary display is measured and determined in advance.

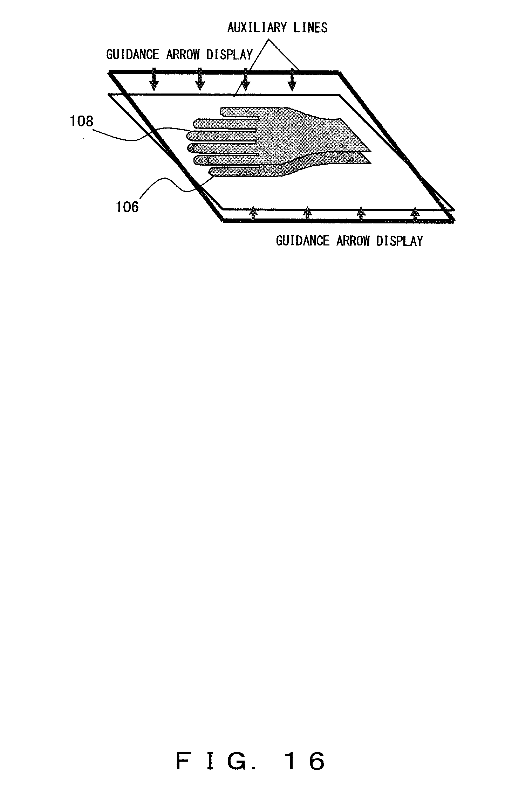

FIG. 16 shows auxiliary display by an auxiliary line according to an embodiment of the present invention.

FIG. 16 practically shows an example of displaying auxiliary lines indicating the position and attitude as enclosing the outside of the subject and the sample virtual image. The auxiliary lines are drawn with the subject 108 and the sample virtual image 106 set at the center, and when the auxiliary lines are displayed, the guidance display such as arrows etc. is performed as overlapping the auxiliary lines, not the subject 108 itself.

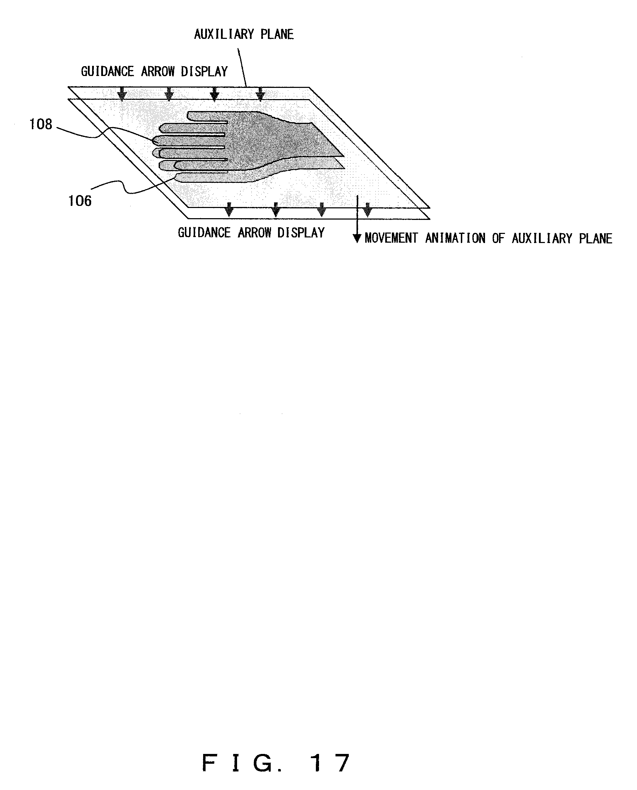

FIG. 17 shows auxiliary display by an auxiliary plane according to an embodiment of the present invention.

FIG. 17 practically shows an example of displaying auxiliary planes indicating the position and attitude around the subject and the sample virtual image. The guidance is performed by overlapping the animation display and arrow display in which the auxiliary plane indicating the subject 108 moves to the position of the sample virtual image.

The auxiliary lines and auxiliary planes can be displayed only when the subject exists in a position where there is the possibility that a sample virtual image is hidden, or can be constantly displayed. However, it is appropriate only when they are required.

The embodiments of the present invention are described with reference to the attached drawings, but the present invention is not limited to the embodiments described above, and various configurations and shapes can be realized within the scope of the gist of the present invention.

## Claims

1. A guidance device which performs measurement by placing an object without contact, comprising:
a virtual image display unit displaying a virtual image;
a sample display generation unit making the virtual image display unit display a sample virtual image based on a shape of the object at a position where the object is to be finally arranged;
a status detection unit detecting a position and attitude of the object;
a correction amount calculation unit calculating a difference between the position and attitude of the object and the position and attitude of the virtual image; and
a guidance display generation device making the virtual image display unit display a guidance display indicating the calculated difference in the same position as the virtual image.

2. The device according to claim 1, wherein
the virtual image has same size and shape as the object.

3. The device according to claim 2, wherein
the size and the shape of the virtual image are determined by data recorded on a storage medium.

4. The device according to claim 1, wherein
the guidance display is arrow display indicating a displacement, a rotation, or a change of shape from a current state of the object to the virtual image.

5. The device according to claim 1, wherein
the guidance display is animation display indicating a displacement, a rotation, or a change of shape from a current state of the object to the virtual image.

6. The device according to claim 4 or 5, wherein
display of the displacement, the rotation, or the change in shape is separately performed from each other.

7. The device according to claim 1, wherein
auxiliary lines indicating respective positions and attitude are displayed around the object and the virtual image.

8. The device according to claim 1, wherein
auxiliary planes indicating respective positions and attitude are displayed around the object and the virtual image.

9. A guiding method for performing measurement by placing an object without contact, comprising:
a step of making a virtual image display unit display a sample virtual image based on a shape of the object at a position where the object is to be finally arranged;
a step of detecting a position and attitude of the object;
a step of calculating a difference between the position and attitude of the object and the position and attitude of the virtual image; and
a step of making the virtual image display unit display a guidance display indicating the calculated difference in the same position as the virtual image.

10. The method according to claim 9, wherein the virtual image has same size and shape as the object.

11. The method according to claim 10, wherein
the size and the shape of the virtual image are determined by data recorded on a storage medium.

12. The method according to claim 9, wherein
the guidance display is arrow display indicating a displacement, a rotation, or a change of shape from a current state of the object to the virtual image.

13. The method according to claim 9, wherein
the guidance display is animation display indicating a displacement, a rotation, or a change of shape from a current state of the object to the virtual image.

14. The method according to claim 12 or 13, wherein
display of the displacement, the rotation, or the change in shape is separately performed from each other.

15. The method according to claim 9, wherein
auxiliary lines indicating respective positions and attitude are displayed around the object and the virtual image.

16. The method according to claim 9, wherein
auxiliary planes indicating respective positions and attitude are displayed around the object and the virtual image.
